# EUROPÄISCHE PATENTSCHRIFT

(11) **EP 2 992 988 B1**
(45) Veröffentlichungstag und Bekanntmachung des Hinweises auf die Patenterteilung: **01.08.2018**
(21) Anmeldenummer: 15181605.5
(22) Anmeldetag: 19.08.2015
(51) Int. Cl.: B23B 31/20

(54) **WERKZEUGHALTER**
TOOL HOLDER
PORTE-OUTIL

(30) Priorität: 20.08.2014 DE 102014111898
(43) Veröffentlichungstag der Anmeldung: 09.03.2016
(73) Patentinhaber: Simtek AG, 72116 Mössingen (DE)
(72) Erfinder: Seifermann, Norbert, 72411 Bodelshausen (DE)
(74) Vertreter: Jakelski & Althoff Patentanwälte PartG mbB

(56) Entgegenhaltungen:
- DE-A1- 4 410 414
- JP-A- 2006 142 428
- US-B1- 6 508 475

## Beschreibung

Die vorliegende Erfindung betrifft einen Werkzeughalter, der die verdrehsichere Aufnahme eines Schneideinsatzes ermöglicht.

### Stand der Technik

Spannfutter dienen dazu, an Werkzeugträgern Einsatzwerkzeuge wie Bohrer oder Schneideinsätze zu befestigen. Es sind verschiedene Ausführungen von Werkzeugträgern mit Spannfuttern bekannt, in denen die Spannfutter ein Bolzengewinde aufweisen, auf das eine Überwurfmutter aufgeschraubt wird. So ist es bekannt, ein konisch zulaufendes Spannfutter vorzusehen, auf das eine Überwurfmutter aufgeschraubt wird, die so dimensioniert ist, das sie nicht an einem Grundkörper des Werkzeugträgers anschlägt. Der Werkzeugträger weist hierdurch Schultern auf, die nicht von der Mutter überdeckt werden, was ihn bezüglich Durchbiegung und Schwingungsdämpfung schwächt. Auch wird bei Betätigung eines in das Spannfutter eingespannten Werkzeugs keine optimale Druckverteilung erreicht. Vielmehr wirken die größten Kräfte auf den konischen Teil des Spannfutters.

Ein solcher Werkzeugträger mit Spannfutter ist aus der DE 44 10 414 A1 bekannt. Dieser ist zur Aufnahme eines röhrenförmigen Kernbohrers vorgesehen.

Weiterhin ist es bekannt, auf den konischen Zulauf des Spannfutters zu verzichten und stattdessen in dessen Spitze ein separates Bauteil zur Werkzeugaufnahme vorzusehen. Hierzu müssen das Spannfutter und die Überwurfmutter allerdings sehr groß ausgeführt werden. Durch die Verwendung eines zusätzlichen Bauteils ist dieser Werkzeugträger zudem aufwendiger aufgebaut als der zuvor beschriebene Werkzeugträger.

Weiterhin ist es bekannt, in einem Werkzeugträger mit Spannfutter und Überwurfmutter das Werkzeug in einer Werkzeugaufnahme mittels eines um dieses umlaufenden Ringes zu fixieren. Hierdurch hat das Werkzeug allerdings seitlich sehr viel Spiel.

Schließlich sind Spannmethoden mittels Hydrodehnfuttern oder Schrumpffuttern bekannt. Diese Methoden stellen eine geringe Durchbiegung und eine gute Schwingungsdämpfung bereit. Damit sind sie für Präzisionsarbeiten besonders geeignet. Allerdings ist der Werkzeugwechsel bei einem Schrumpffutter sehr umständlich und Hydrodehnfutter sind sehr aufwändig in der Herstellung.

Es ist Aufgabe der vorliegenden Erfindung, einen Werkzeughalter bereitzustellen, der eine verdrehsichere Befestigung eines Werkzeugs bei geringer Durchbiegung und guter Schwingungsdämpfung ermöglicht und der einen einfachen Aufbau aufweist.

### Offenbarung der Erfindung

Diese Aufgabe wird durch den erfindungsgemäßen Werkzeughalter gemäß dem Anspruch 1 gelöst.

Dieser weist einen Grundkörper auf, in dem sich ein Werkzeugaufnahmebereich befindet. Weiterhin weist er ein kreiszylinderförmiges Spannfutter mit mehreren Trennfugen und einem Außengewinde auf, welches einen Außensteigungswinkel aufweist. Unter kreiszylinderförmig wird erfindungsgemäß eine nicht konische Form des Spannfutters verstanden, welche auch keine konischen Teilbereiche aufweist. Schließlich weist er eine Überwurfmutter mit einem Innengewinde auf, das einen Innensteigungswinkel aufweist. Der Außensteigungswinkel unterscheidet sich von dem Innensteigungswinkel. Die Überwurfmutter weist eine Anschlagfläche an dem Grundkörper oder an dem Spannfutter auf. Unter einer Anschlagfläche wird dabei erfindungsgemäß eine Fläche verstanden, welche orthogonal zur Längsachse des Grundkörpers verläuft und an der die Überwurfmutter beim Aufdrehen auf das kreiszylinderförmige Spannfutter anschlägt. Die erfindungsgemäße Ausführung des Spannfutters gewährleistet eine gleichmäßige Druckverteilung beim Anziehen der Überwurfmutter.

Um zu gewährleisten, dass über ein Spannfutter, welches hinreichend kurz ist, damit ein übliches Werkzeug durch dieses hindurch in die Werkzeugaufnahme des Grundkörpers geführt werden kann, beim Anziehen der Überwurfmutter ein so großer Druck auf das Werkzeug ausgeübt werden kann, dass dieses sicher im Spannfutter gehalten wird, beträgt der Spitzenwinkel des Gewindes vorzugsweise mindestens 60°. Besonders bevorzugt liegt er im Bereich von 90° bis 135°.

Die Gewindesteigung des Innengewindes der Überwurfmutter gemäß der Norm DIN 13-1 liegt bevorzugt im Bereich von 0,75 mm bis 1,50 mm. Hierdurch wird verhindert, dass die Überwurfmutter beim Anziehen überspringt oder sich löst.

Dass Spannfutter und die Überwurfmutter bestehen vorzugsweise jeweils aus einem Material, das ein Elastizitätsmodul von mindestens 180 kN/mm² aufweist. Dadurch wird sichergestellt, dass ein starkes Anziehen der Überwurfmutter möglich ist, ohne dass hierdurch die Gefahr bestände, dass die Überwurfmutter oder das Spannfutter sich bleibend verformen oder brechen. Das Elastizitätsmodul kann gemäß der Norm EN ISO 6892-1 ermittelt werden.

Um während des Anziehens der Überwurfmutter ein Verdrehens eines Werkzeugs, das im Werkzeugaufnahmebereich eingeführt wird, zu verhindern weist der Grundkörper bevorzugt einen Kanal zur Aufnahme eines Anschlagstiftes auf, der den Werkzeugaufnahmebereich orthogonal zur Längsachse des Grundkörpers schneidet. Das abgeschrägte Ende eines in den Werkzeugaufnahmebereich eingeführten Werkzeugs kann an diesem Anschlagstift anschlagen, wodurch es lagerichtig und verdrehsicher in dem Werkzeugaufnahmebereich fixiert wird.

In einer bevorzugten Ausführungsform des erfindungsgemäßen Werkzeughalters befindet sich die Anschlagfläche an dem dem Spannfutter zugewandten Ende des Grundkörpers. Der Außensteigungswinkel in dieser Ausführungsform ist besonders bevorzugt kleiner als der Innensteigungswinkel, um nach Anschlagen der Überwurfmutter an der Anschlagfläche ein weiteres Anziehen der Überwurfmutter unter Spannen des Spannfutters zu ermöglichen. Hierzu liegt der Außensteigungswinkel ganz besonders bevorzugt im Bereich von 99,7% bis 99,9% des Innensteigungswinkels.

In einer anderen bevorzugten Ausführungsform des Werkzeughalters befindet sich die Anschlagfläche an dem dem Grundkörper abgewandten Ende des Spannfutters. Es ist in dieser Ausführungsform besonders bevorzugt, dass der Außensteigungswinkel größer als der Innensteigungswinkel ist. Dies ermöglicht ein Spannen des Spannfutters durch weiteres Anziehen der Überwurfmutter, nachdem diese an die Anschlagfläche angeschlagen ist. Hierzu ist es ganz besonders bevorzugt, dass der Außensteigungswinkel im Bereich von 100,1% bis 100,3% des Innensteigungswinkels liegt.

Kurze Beschreibung der Zeichnungen
- Fig. 1: zeigt eine isometrische Darstellung eines Werkzeughalters gemäß einem Ausführungsbeispiel der Erfindung.
- Fig. 2: zeigt eine teilweise geschnittene Seitenansicht des Werkzeughalters gemäß Fig. 1.
- Fig. 3: zeigt eine isometrische Darstellung des Werkzeughalters gemäß Fig. 1 nach Entfernen seiner Überwurfmutter.
- Fig. 4: zeigt eine Schnittseitenansicht eines Details des Spannfutters des Werkzeughalters gemäß Fig. 3.
- Fig. 5: zeigt eine Schnittansicht der Überwurfmutter des Werkzeughalters gemäß Fig. 1.
- Fig. 6: zeigt eine isometrische Darstellung eines Werkzeughalters gemäß einem anderen Ausführungsbeispiel der Erfindung.
- Fig. 7: zeigt eine teilweise geschnittene Seitenansicht des Werkzeughalters gemäß Fig. 6.

### Ausführungsbeispiele der Erfindung

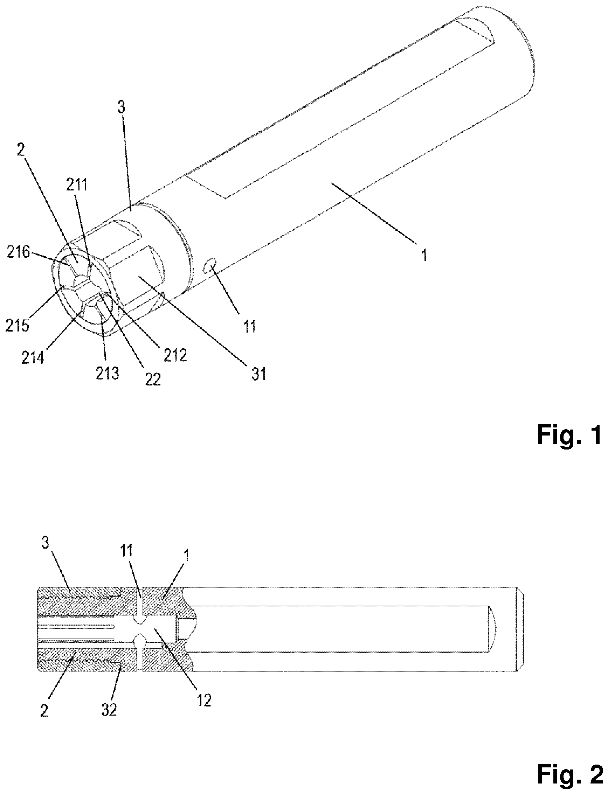

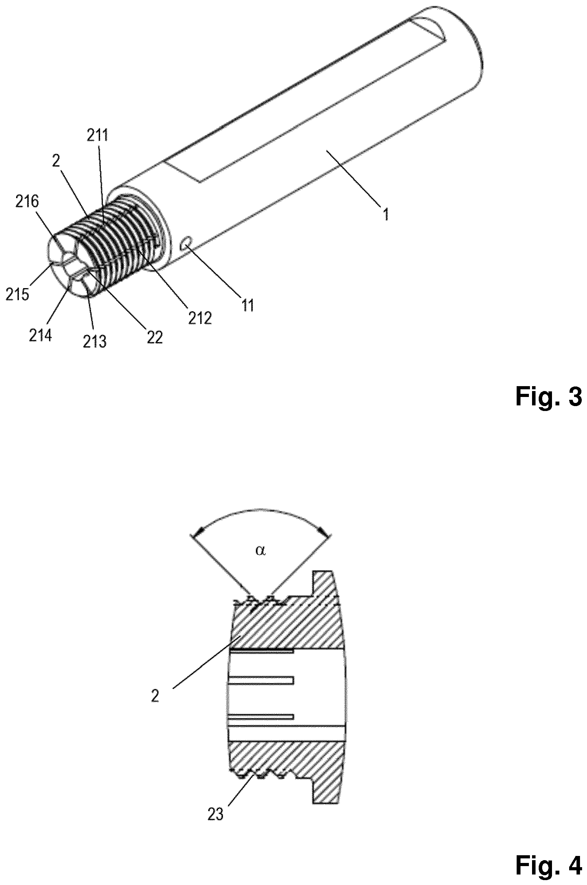

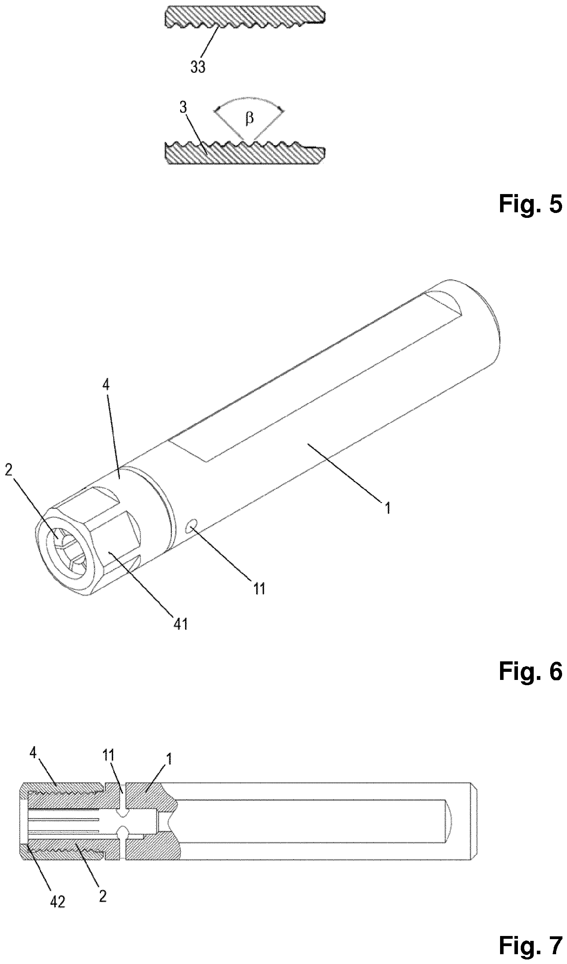

Ein Werkzeughalter gemäß einem ersten Ausführungsbeispiel der Erfindung ist in den Figuren 1 bis 3 dargestellt. Er weist einen kreiszylinderförmigen Grundkörper 1 mit einer seitlichen Abflachung und einen orthogonal zur Längsachse des Grundkörpers 1 durch diesen verlaufenden Kanal 11 auf. An einem Ende des Grundkörpers 11 befindet sich in seinem Inneren ein kreiszylinderförmiger Werkzeugaufnahmebereich 12, welcher parallel zur Längsachse des Grundkörpers 1 verläuft und von dem Kanal 11 geschnitten wird. An dem Ende des Grundkörpers 1, welches den Werkzeugaufnahmebereich 12 aufweist, schließt sich ein kreiszylinderförmiges Spannfutter 2 mit sechs Trennfugen 211, 212, 213, 214, 215, 216 an. Das Spannfutter 2 weist einen hohlen Innenraum auf, der sich entlang seiner Längsachse erstreckt und in dem Werkzeugaufnahmebereich 12 des Grundkörpers 1 endet. Parallel zu diesem hohlen Bereich und mit ihm verbunden, verläuft eine Kühlmittelzufuhr 22, die sich ebenfalls bis zum Grundkörper 1 erstreckt. Ein Werkzeug, wie beispielsweise ein vollständig präzisionsgeschliffener Schneideinsatz, welches ein abgeschrägtes Ende aufweist, kann durch das Spannfutter 2 in den Werkzeugaufnahmebereich 12 des Grundkörpers 1 geführt werden. Wenn in dem Kanal 11 ein Anschlagstift (nicht gezeigt) positioniert ist, so schlägt der abgeschrägte Bereich des Schneideinsatzes an diesen Anschlagstift an, so dass das Werkzeug in seiner Lage richtig fixiert wird und ein Verdrehen des Werkzeugs verhindert wird. Zum Spannen des Spannfutters 2 ist eine Überwurfmutter 3 vorgesehen, die an ihrer Außenseite Anlageflächen 31 aufweist, um die Überwurfmutter 3 mittels eines Schraubenschlüssels anzuziehen. Beim Anziehen der Überwurfmutter 3 schlägt diese zunächst an einer Anschlagfläche 32 an, welche sich an dem dem Spannfutter 2 zugewandten Ende des Grundkörpers 1 befindet. Ein noch weiteres Anziehen der Überwurfmutter 3 führt zum einem Spannen des Spannfutters 2. Wie in Figur 4 dargestellt ist, weist das Spannfutter 2 hierzu ein Außengewinde 23 mit einem Außenspitzenwinkel α von 120° auf. Die Überwurfmutter 3 weist, wie in Figur 5 dargestellt ist, ein Innengewinde 33 mit einem Innenspitzenwinkel β von 120° und einer Gewindesteigung von 1 mm auf. Dies ermöglicht beim Anziehen der Überwurfmutter 3 eine hohe Kraftübertragung auf das Spannfutter 2. Um hierbei ein Brechen des Werkzeughalters zu verhindern, bestehen der Grundkörper 1, das Spannfutter 2 und die Überwurfmutter 3 aus Stahl mit einem E-Modul von 195 kN/mm².

Ein Werkzeughalter gemäß einem zweiten Ausführungsbeispiel der Erfindung ist in den Figuren 6 und 7 dargestellt. Der Grundkörper 1 und das Spannfutter 2 sind hierbei identisch zum ersten Ausführungsbeispiel der Erfindung ausgeführt. Allerdings weist der Werkzeughalter des zweiten Ausführungsbeispiels eine Überwurfmutter 4 mit außen liegenden Anlageflächen 41 auf, die nicht an dem dem Spannfutter 2 zugewandten Ende des Grundkörpers 1 anschlägt. Stattdessen springt die Überwurfmutter an ihrem dem Grundkörper 1 abgewandten Ende zu ihrem Zentrum hin vor und bildet so eine Anschlagfläche 42 mit dem Ende des Spannfutters 2, welches dem Grundkörper 1 abgewandt ist. Die Überwurfmutter 4 ist hinreichend kurz, dass sie bei ihrem Anziehen an dieser Anschlagfläche 42 anschlägt, noch bevor sie den Grundkörper 1 berühren kann. Auch in diesem zweiten Ausführungsbeispiel des erfindungsgemäßen Werkzeughalters führt ein weiteres Anziehen der Überwurfmutter 4 nach Anschlagen an der Anschlagfläche 42 zu einem Spannen des Spannfutters 2. Der Innensteigungswinkel der Überwurfmutter 4 des zweiten Ausführungsbeispiels des Werkzeughalters beträgt allerdings nur 99,7% bis 99,9% des Außensteigungswinkels. Damit ist er, anders als im ersten Ausführungsbeispiel, nicht größer als der Außensteigungswinkel des Außengewindes 23 des Spannfutters 2, sondern stattdessen kleiner als der Außensteigungswinkel.

## Patentansprüche

1. Werkzeughalter, aufweisend
- einen Grundkörper (1) in dem sich ein Werkzeugaufnahmebereich (12) befindet,
- ein kreiszylinderförmiges Spannfutter (2) mit mehreren Trennfugen (211, 212, 213, 214, 215, 216) und einem Außengewinde (23), das einen Außensteigungswinkel aufweist, und
- eine Überwurfmutter (3, 4) mit einem Innengewinde (33), das einen Innensteigungswinkel aufweist,
**dadurch gekennzeichnet, dass** die Überwurfmutter (3, 4) eine Anschlagfläche (32, 42) an dem Grundkörper (1) oder an dem Spannfutter (2) aufweist, und dass der Außensteigungswinkel sich von dem Innensteigungswinkel unterscheidet.

2. Werkzeughalter nach Anspruch 1, **dadurch gekennzeichnet, dass** das Außengewinde einen Gewindespitzenwinkel (α) aufweist, der mindestens 60° beträgt.

3. Werkzeughalter nach Anspruch 1 oder 2, **dadurch gekennzeichnet, dass** das Innengewinde eine Gewindesteigung im Bereich von 0,75 mm bis 1,50 mm aufweist.

4. Werkzeughalter nach einem der Ansprüche 1 bis 3, **dadurch gekennzeichnet, dass** das Spannfutter und die Überwurfmutter jeweils aus einem Material bestehen, das ein E-Modul von mindestens 180 kN/mm² aufweist.

5. Werkzeughalter nach einem der Ansprüche 1 bis 4, **dadurch gekennzeichnet, dass** der Grundkörper (1) einen Kanal (11) zur Aufnahme eines Anschlagstiftes aufweist, der den Werkzeugaufnahmebereich (12) orthogonal zur Längsachse des Grundkörpers (1) schneidet.

6. Werkzeughalter nach einem der Ansprüche 1 bis 5, **dadurch gekennzeichnet, dass** die Anschlagfläche (32) sich an dem dem Spannfutter (2) zugewandten Ende des Grundkörpers (1) befindet.

7. Werkzeughalter nach Anspruch 6, **dadurch gekennzeichnet, dass** der Außensteigungswinkel kleiner als der Innensteigungswinkel ist.

8. Werkzeughalter nach Anspruch 7, **dadurch gekennzeichnet, dass** der Außensteigungswinkel im Bereich von 99,7% bis 99,9% des Innensteigungswinkels liegt.

9. Werkzeughalter nach einem der Ansprüche 1 bis 5, **dadurch gekennzeichnet, dass** die Anschlagfläche (42) sich an dem dem Grundkörper (1) abgewandten Ende des Spannfutters (2) befindet.

10. Werkzeughalter nach Anspruch 9, **dadurch gekennzeichnet, dass** der Außensteigungswinkel größer als der Innensteigungswinkel ist.

11. Werkzeughalter nach Anspruch 10, **dadurch gekennzeichnet, dass** der Außensteigungswinkel im Bereich von 100,1% bis 100,3% des Innensteigungswinkels liegt.

## Claims

1. Tool holder, having
- a basic body (1) in which a tool receiving region (12) is located,
- a circular cylindrical clamping chuck (2) having several joints (211, 212, 213, 214, 215, 216) and an external thread (23) which has an external pitch angle, and
- a union nut (3, 4) having an internal thread (31, 41) which has an internal pitch angle,
**characterised in that** the union nut (3, 4) has a stopping face (32, 42) on the basic body (1) or on the clamping chuck (2), and the external pitch angle is different from the internal pitch angle.

2. Tool holder according to claim 1, **characterised in that** the external thread has a thread point angle (α) that is at least 60°.

3. Tool holder according to claim 1 or 2, **characterised in that** the internal thread has a thread pitch ranging from 0.75 mm to 1.50 mm.

4. Tool holder according to one of claims 1 to 3, **characterised in that** the clamping chuck and the union nut each consist of a material that has an elasticity modulus of at least 180 kN/mm².

5. Tool holder according to one of claims 1 to 4, **characterised in that** the basic body (1) has a channel (11) for receiving a positioning pin, which cuts the tool receiving region (12) orthogonally with respect to the longitudinal axis of the basic body (1).

6. Tool holder according to one of claims 1 to 5, **characterised in that** the stopping face (32) is located at the end of the basic body (1) facing towards the clamping chuck (2).

7. Tool holder according to claim 6, **characterised in that** the external pitch angle is smaller than the internal pitch angle.

8. Tool holder according to claim 7, **characterised in that** the external pitch angle is in the range of 99.7% to 99.9% of the internal pitch angle.

9. Tool holder according to one of claims 1 to 5, **characterised in that** the stopping face (42) is located at the end of the clamping chuck (2) facing away from the basic body (1).

10. Tool holder according to claim 9, **characterised in that** the external pitch angle is greater than the internal pitch angle.

11. Tool holder according to claim 10, **characterised in that** the external pitch angle is in the range of 100.1% to 100.3% of the internal pitch angle.

## Revendications

1. Porte-outil, comprenant
- un corps de base (1) dans lequel se trouve une zone de réception d'outil (12),
- un mandrin de serrage (2) en forme de cylindre circulaire avec plusieurs joints de séparation (211, 212, 213, 214, 215, 216) et un filetage extérieur (23) qui présente un angle extérieur d'inclinaison, et
- un écrou d'accouplement (3, 4) avec un filetage intérieur (33) qui présente un angle intérieur d'inclinaison,
**caractérisé en ce que** l'écrou d'accouplement (3, 4) présente une surface de butée (32, 42) sur le corps de base (1) ou sur le mandrin de serrage (2), et que l'angle extérieur d'inclinaison se différencie de l'angle intérieur d'inclinaison.

2. Porte-outil selon la revendication 1, **caractérisé en ce que** le filetage extérieur présente un angle de sommet de filet (a) qui est d'au moins 60°.

3. Porte-outil selon la revendication 1 ou 2, **caractérisé en ce que** le filetage intérieur présente un pas de filetage dans une plage de 0,75 mm à 1,50 mm.

4. Porte-outil selon l'une des revendications 1 à 3, **caractérisé en ce que** le mandrin de serrage et l'écrou d'accouplement sont constitués chacun d'un matériau qui présente un module d'élasticité d'au moins 180 kN/mm².

5. Porte-outil selon l'une des revendications 1 à 4, **caractérisé en ce que** le corps de base (1) présente un conduit (11) destiné à recevoir une goupille de butée qui coupe la zone de réception d'outil (12) de manière perpendiculaire à l'axe longitudinal du corps de base (1).

6. Porte-outil selon l'une des revendications 1 à 5, **caractérisé en ce que** la surface de butée (32) se trouve sur l'extrémité du corps de base (1) tournée vers le mandrin de serrage (2).

7. Porte-outil selon la revendication 6, **caractérisé en ce que** l'angle extérieur d'inclinaison est plus petit que l'angle intérieur d'inclinaison.

8. Porte-outil selon la revendication 7, **caractérisé en ce que** l'angle extérieur d'inclinaison se trouve dans une plage de 99,7 % à 99,9 % de l'angle intérieur d'inclinaison.

9. Porte-outil selon l'une des revendications 1 à 5, **caractérisé en ce que** la surface de butée (42) se trouve sur l'extrémité du mandrin de serrage (2) tournée vers le corps de base (1).

10. Porte-outil selon la revendication 9, **caractérisé en ce que** l'angle extérieur d'inclinaison est plus grand que l'angle intérieur d'inclinaison.

11. Porte-outil selon la revendication 10, **caractérisé en ce que** l'angle extérieur d'inclinaison se trouve dans une plage de 100,1 % à 100,3 % de l'angle intérieur d'inclinaison.
